# EUROPÄISCHE PATENTANMELDUNG

(11) **EP 0 767 582 A1**
(43) Veröffentlichungstag der Anmeldung: **09.04.1997**
(21) Anmeldenummer: 96116036.3
(22) Anmeldetag: 07.10.1996
(51) Int. Cl.: H04N 5/232, H01P 5/18

(54) **Einrichtung zur Aufnahme und zum Transport von Bild- und/oder Tonerfassungseinrichtungen**

(30) Priorität: 07.10.1995 DE 19537451
(71) Anmelder: Aulebach, Henner, 22761 Hamburg (DE)
(72) Erfinder: Aulebach, Henner, 20257 Hamburg (DE); Kruse, Claus, 27419 Hamersen (DE)
(74) Vertreter: Niedmers, Ole, Dipl.-Phys.

(57) **Zusammenfassung**

Es wird eine Einrichtung zur Aufnahme und zum Transport von Bild- und/oder Tonerfassungseinrichtungen in Studios und/oder im Freien vorgeschlagen, wobei von den Bild- und/oder Tonerfassungseinrichtungen gelieferte hochfrequente Video- und/oder Audiosignale durch Übertragungseinrichtungen auf die Signale ver- und/oder bearbeitende Einrichtungen weitergeleitet werden. Das Übertragungssystem wird durch ein am Ort der jeweiligen Installation der Bild- und/oder Tonerfassungseinrichtung installierbares Schienenelement (10) gebildet, in das die von der Bild- und/oder Tonerfassungseinrichtung gelieferten hochfrequenten Signale berührungslos eingekoppelt werden, wobei die Bild- und/oder Tonerfassungseinrichtung vom Schienenelement (10) aufnehmbar und längs diesem verschiebbar ist.

## Beschreibung

Die Erfindung betrifft eine Einrichtung zur Aufnahme und zum Transport von Bild- und/oder Tonerfassungseinrichtungen in Studios und/oder im Freien, wobei von den Bild- und/oder Tonerfassungseinrichtungen gelieferte hochfrequente Video- und/oder Audiosignale durch Übertragungseinrichtungen auf die Signale ver- und/oder bearbeitende Einrichtungen weitergeleitet werden.

Einrichtungen oder Systeme der vorgenannten Art sind seit langem bekannt und werden in Aufnahmestudios von Sendeanstalten, in Studios zur Herstellung von Film- oder Fernsehproduktionen aber auch bei Video- und Audioaufnahmen im Freien eingesetzt. Dabei sind die Bild- und/oder Tonerfassungseinrichtungen, die im allgemeinen mit Videokameras bzw. mit Mikrofoneinrichtungen bezeichnet werden, mit Verarbeitungs- oder Bearbeitungseinrichtungen verbunden, in denen die von diesen gelieferten Video- und/oder Audiosignale ver- und/oder bearbeitet werden. Einrichtungen dieser Art sind beispielsweise Aufzeichnungseinrichtungen, Regieeinrichtungen, Schneidetische usw. oder auch zunächst Signalaufbearbeitungseinrichtungen, um die von den Bild- und/oder Tonerfassungeinrichtungen kommenden Signale zu verstärken oder zu filtern oder sonstwie aufzubereiten.

Diese eigentlichen zwischen Bild- und/oder Tonerfassungseinrichtungen und den die Signale ver- und/oder bearbeitenden Einrichtungen angeordneten Übertragungseinrichtungen sind heutzutage regelmäßig simple Kabelverbindungen, die immer dann außerordentlich nachteilig sind, wenn die Bild- und/oder Tonerfassungseinrichtung über weite Strecken bewegt werden soll, was naturgemäß für eine gute Bewegbarkeit außerordentlich hinderlich ist. Diese in der Fachwelt mit Kabelschlepp bezeichnete Übertragungseinrichtung ist aber nicht nur äußerst bewegungshemmend mit der Folge, daß diese Art der Übertragungseinrichtung, auch nur einen verhältnismäßig langsamen Transport der Bild- und/oder Tonerfassungseinrichtung von einer Stelle zu einer anderen gewünschten Stelle gestattet, vielmehr ist diese Art der Übertragungseinrichtung auch aufgrund der damit einhergehenden Fahr- und Schleppgeräusche äußerst nachteilig, was sich insbesondere bei sehr aufwendigen Audio- und Videoproduktionen negativ bemerkbar macht.

Man hat dieses Problem der Übertragungseinrichtungen mittels Kabeln dadurch zu beheben versucht, daß man die Übertragung der Signale von der Bild- und/oder Tonerfassungseinrichtung auf die Ver- und/oder Bearbeitungseinrichtung mittels einer Funkübertragungsstrecke zu lösen versuchte, diese Art der Ausbildung der Übertragungseinrichtung hat jedoch den erheblichen Nachteil einer außerordentlich hohen Störanfälligkeit nicht nur bei der Aufnahme von Audio- und Videoaufnahmen im Freien, sondern auch im Studio.

Aufgrund vielfacher Reflektionen im Studio und sonstiger Beeinträchtigungen sind sehr aufwendige Produktionen aufgrund dieser möglichen großen Fehlerquelle nicht realisierbar, wenn hohe und höchste Anforderungen an die Qualität der Video- und/oder Audioaufnahme gestellt werden. Zudem ist eine Ausbildung der Übertragungseinrichtung in Form einer Funkstrecke aufgrund der Bereitstellung von aufwendigen Sendern und Empfängern extrem kostenträchtig und erfordert neben den hohen Gestehungskosten auch einen immensen Überwachungs- und Wartungsaufwand.

Es ist deshalb Aufgabe der vorliegenden Erfindung, eine Einrichtung der Eingangs genannten Art zu schaffen, mit der auf einfache Weise aber störungsfrei ein hochbewegliches System geschaffen werden kaum, mit dem von Bild- und/oder Tonerfassungseinrichtungen gelieferte Signale auf ver- und/oder bearbeitende Einrichtungen geliefert werden können, wobei Störgeräusche und sonstige Schwierigkeiten mit der Handhabung der Übertragungseinrichtungen, wie sie bisher erforderlich waren, vollständig entfallen, wobei das System einfach und kostengünstig herstellbar sein soll, einfach und kostengünstig aufbaubar und demontierbar sein soll und einfach und kostengünstig den geänderten Bedingungen an einem Einsatzort angepaßt werden kann und die Nachteile bekannter Übertragungeinrichtungen nicht aufweist.

Gelöst wird die Aufgabe gemäß der Erfindung dadurch, daß die Übertragungseinrichtung durch ein am Ort der jeweiligen Installation der Bild- und/oder Tonerfassungseinrichtung installierbares Schienensystem gebildet wird, in das die von der Bild- und/oder Tonerfassungseinrichtung gelieferten hochfrequenten Signale berührungslos eingekoppelt werden, wobei die Bild- und/oder Tonerfassungseinrichtung vom Schienenelement aufnehmbar und längs diesem verschiebbar ist.

Der Vorteil der erfindungsgemäß vorgeschlagenen Lösung besteht im wesentlichen darin, daß einerseits die Einrichtung einfach ausbildbar ist und andererseits keine Störungen, wie Sie bisher bei Funkübertragungsstrecken beobachtet worden sind, auftreten können. Zudem gestattet die Einrichtung eine sehr schnelle Verfahrbarkeit der Bild- und/oder Tonerfassungseinrichtung längs des Schienenelementes, was zudem ferngesteuert erfolgen kann. Beim Verfahren der Bild- und/oder Tonerfassungseinrichtung erfolgt zudem kein Kabelschlepp mehr, so daß bisher auftretende Geräusche, die vom Kabelschlepp und der Verfahreinrichtungen herrührten, vollständig entfallen, wobei zudem aufgrund des Wegfalls von Übertragungskabeln eine erhebliche Gewichtsverminderung einhergeht, so daß die zu bewegende Masse im wesentlichen nur noch durch die eigentliche Bild- und/oder Tonerfassungseinrichtung gebildet wird. Dieses hat zur Folge, daß auch aus diesem Grunde eine schnellere Bewegbarkeit der Bild- und/oder Tonerfassungeinrichtungen möglich ist, was für viele Video- und/oder Audioaufnahmezwecke von großem Vorteil ist. Durch entsprechende Modulation von hochfrequenten Signalen kann über das Schienenelement auch eine Steuerung der Bild- und/oder Tonerfassungseinrichtung erfolgen, d.h. in umgekehrter Richtung als die Video- und/oder Audiosignale, die von der Bild- und/oder Tonerfassungseinrichtung kommen.

Das Schienenelement selbst wird vorteilhafterweise durch eine in Längsrichtung geschlitzte, ansonsten im Querschnitt geschlossene Kopplungsschiene gebildet. Die eigentliche Kopplungsschiene ist derart von den übrigen Teilen des Schienenelements zu separieren, daß gewährleistet ist, daß das hochfrequente Video- und/oder Audiosignal ungestört durch den Schlitz in den Innenraum der Kopplungsschiene eingekoppelt werden kann, um eine störungsfreie Übertragung der hochfrequenten Video- und/oder Audiosignale in der einen Richtung bzw. von Steuersignalen zur Steuerung der Bild- und/oder Tonerfassungseinrichtungen aus der Kopplungsschiene heraus zu gewährleisten. Der Längsschlitz muß in jedem Falle derart bemessen sein, daß eine Übertragung der hochfrequenten Signale an allen Orten des Schienenelements gewährleistet ist.

Der eigentliche Hochfrequenzleiter ist vorzugsweise in der Kopplungsschiene im wesentlichen im Querschnitt mittig und in Längsrichtung der Kopplungsschiene verlaufend angeordnet, wobei der den Hochfrequenzleiter umgebende Innenraum der Kopplungsschiene mit einem Isolationsmittel ausgefüllt ist, das gleichzeitig als Abstandshalter wirkt, um zu gewährleisten, daß der Hochfrequenzleiter an allen Orten des Schienenelements gleichen Abstand zu den Innenobenflächen der Kopplungsschiene hat.

Um zu gewährleisten, daß auch für die Verfahrbarkeit der längs des Schienenelementes verfahrbaren Bild- und/oder Tonerfassungseinrichtung eine Spannungsversorgung an allen Orten des Schienenelements gewährleistet ist, umfaßt des Schienenelement wenigstens eine Stromversorgungsschiene mit in Längsrichtung verlaufenden Kontaktbahnen, über die an allen Orten des Schienenelements die Spannungsversorgung der Bild- und/oder Tonerfassungseinrichtung sichergestellt ist. Über diese Kontaktbahnen können ebenfalls entsprechend aufbereitet oder moduliert Steuersignale zur Steuerung der Bild- und/oder Tonerfassungseinrichtung zusätzlich oder alternativ zu einer Übertragung von Steuerungssignalen über den Hochfrequenzleiter zu den Bild- und/oder Tonerfassungseinrichtungen erfolgen.

Gemäß einer vorteilhaften Ausgestaltung der Einrichtung ist zur Aufnahme und zum Transport der Bild- und/oder Tonerfassungeinrichtung eine mit dem Schienenelement verbindbare und an diesem längsverbare Fahreinrichtung vorgesehen, d.h. eine wagenähnliche Einrichtung, auf der beispielsweise eine Videokamera und/oder Mikrophone und/oder Einrichtungen zum Verschwenken der Kamera und/oder der Mikrophone angeordnet werden können, so daß die eigentlichen Bild- und/oder Tonerfassungseinrichtungen in vorbereitete Aufnahmen, die ggf. alle Verbindungen für die Steuersignale und/oder Video- und/oder Audiosignale enthalten, eingesetzt zu werden brauchen.

Die Einkoppelung der hochfrequenten Signale in das Schienenelement erfolgt vorteilhafterweise bild-und/oder tonerfassungeinrichtungsseitig über einen mit der Bild- und/oder Tonerfassungeinrichtung verbundenen Richtungskoppler, der geeignet über dem Schienenelement positioniert an jeder Stelle des Schienenelementes die Video- und/oder Audiosignale in das Schienenelement berührungslos einkoppelt bzw. in den vom Schienenelement berührungslos Steuersignale für die Bild- und/oder Tonerfassungseinrichtung eingekoppelt werden können.

Der Richtungskoppler selbst umfaßt wenigstens zwei im wesentlichen parallel angeordnete Siganlkoppeldrähte, über die die hochfrequenten Signale in daß Schienenelement eingekoppelt werden, wobei die Signalkoppeldrähte im wesentlichen parallel zum Schienenelement ausgerichtet sind. Die Einkoppelung im vorbeschriebenen Sinne soll aber derart verstanden werden, daß natürlich auch eine Einkoppelung hochfrequenter Steuersignale, die über das Schienenelement von Steuereinrichtungen für die Bild- und/oder Tonerfassungseinrichtung zugeführt werden, in die Signalkoppeldrähte eingekoppelt werden und von dort zur Bild- und/oder Tonerfassungseinrichtung weitergeleitet werden.

Das Schienenelement selbst wird aus einem Metallprofil gebildet, das ggf. schon als im Handel erhältliches vorkonfektioniertes Produkt Verwendung finden kann. Dadurch kann die Anfertigung besonderer Metallprofile vermieden werden, wodurch eine sehr kostengünstige Bereitstellbarkeit der Schienenelemente gewährleistet werden kann.

Das das Schienenelement bildende Metall kann beispielsweise Aluminium oder eine Aluminiumlegierung sein, grundsätzlich eignen sich aber auch beliebige andere gut leitfähige Metalle bzw. Metallegierungen dafür.

Der Hochfrequenzleiter selbst kann beispielsweise aus einem Rohr aus Kupfer oder einer Kupferlegierung bestehen und ist deshalb als im Handel erhältliches vorkonfektioniertes Teil ebenfalls kostengünstig bereitstellbar und trägt somit zur kostengünstigen Bereitstellbarkeit der Gesamteinrichtung bzw. des Schienenelementes bei.

Der Erfindung wird nun unter Bezugnahme auf die nachfolgenden schematischen Zeichnungen anhand eines Ausführungsbeispieles im einzelnen beschrieben. Darin zeigen:
- Fig. 1: in perspektivischer Darstellung einen Schnitt durch die das Schienenelement umfassende Kopplungsschiene und darauf angeordnetem Richtungskoppler und
- Fig. 2: in perspektivischer Darstellung einen Richtungskoppler in seiner Gesamtheit.

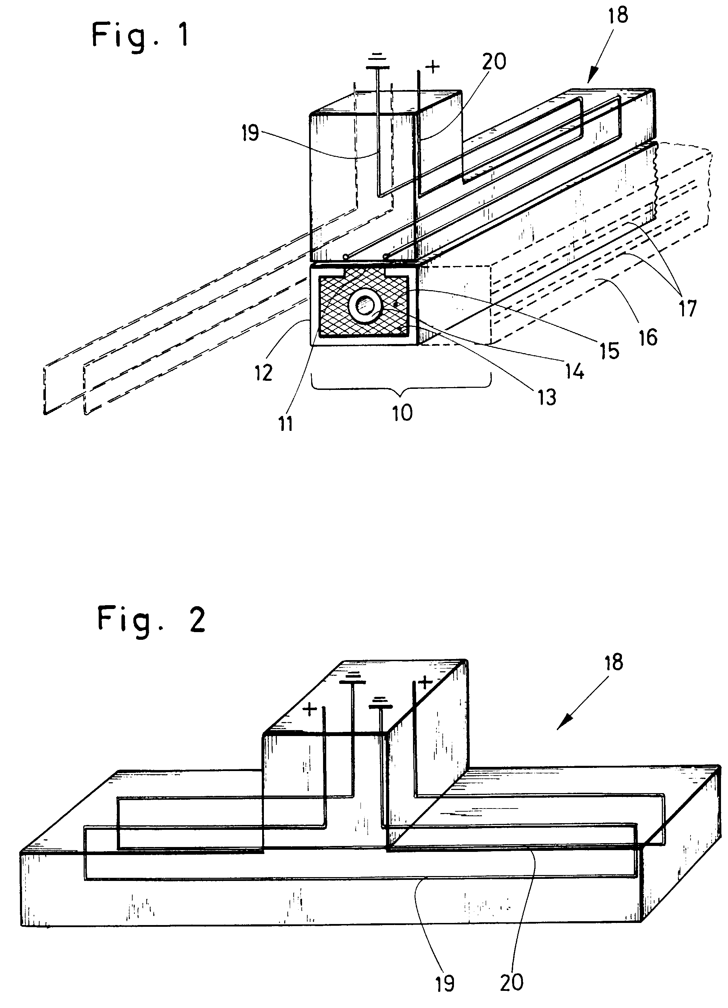

Das in Fig. 1 dargestellte Schienenelement 10 umfaßt im wesentlichen eine Kopplungsschiene 12 und eine Stromversorgungsschiene 16, die geeignet miteinander verbunden sind. Die Darstellung in Fig. 1 zeigt lediglich schematisch den Aufbau eines Schienenelements 10, wobei darauf hinzuweisen ist, daß es prinzipiell beliebige geeignete Möglichkeiten gibt, eine oder mehrere Stromversorgungsschienen 16 vorzusehen und mit einer oder mehreren Kopplungsschienen 12 geeignet zu verbinden. Fig. 1 soll lediglich als Schema verstanden werden zur Darstellung des erfindungsgemäßen Prinzips.

Die Kopplungsschiene 12 wird hier durch ein U-förmig geformtes Metallprofil gebildet, das zudem nahezu geschlossen ist, wobei ein Schlitz 11 in Längsrichtung der Kopplungsschiene 12 verlaufend ausgebildet ist. Im Innenraum 14 der Kopplungsschiene 12 ist ein geeignetes Isolationsmittel 15 vorgesehen, das den Teil des Innenraums 14 vollständig ausfüllt, der nicht von einem rohrförmigen Hochfrequenzleiter 13 ausgefüllt wird, der ebenfalls wie der Schlitz 11 längs der gesamten Kopplungsschiene 12 verläuft. Der Hochfrequenzleiter 13 ist im wesentlichen mittig in bezug auf den Querschnitt des Innenraumes 14 angeordnet. Der Hochfrequenzleiter 13 stellt die eigentliche Übertragungseinrichtung von der hier nicht dargestellten Bild- und/oder Tonerfassungseinrichtung zu einer hier ebenfalls nicht dargestellten Ver- und/oder Bearbeitungseinrichtung dar, auf die die von der Bild- und/oder Tonerfassungseinrichtung gelieferten Video- und/oder Audiosignale übertragen werden.

Über diesen Hochfrequenzleiter 13 können aber auch in umgekehrter Richtung von einer Ver- und/oder Bearbeitungseinrichtung oder einer Steuereinrichtung, die hier ebenfalls nicht dargestellt ist, gelieferte Steuersignale für die Bild- und/oder Tonerfassungeinrichtung übertragen werden.

Das Schienenelement 11 umfaßt, wie eingangs erwähnt, ebenfalls eine oder mehrere Stromversorgungsschienen 16, die ebenfalls eine oder mehrere Kontaktbahnen 17 aufweisen, die ähnlich dem Schlitz 11 und dem Hochfrequenzleiter 13 in der Kopplungsschiene 12 längs des gesamten Schienenelements 10 verlaufen. Über diese Kontaktbahnen 17 wird die Bild- und/oder Tonerfassungseinrichtung mit einer Versorgungsspannung oder ggf. mehreren Versorgungsspannungen versorgt bzw. wird eine hier nicht dargestellte Fahreinrichtung mit Betriebsspannung und ggf. Steuersignalen versorgt, auf der die Bild- und/oder Tonerfassungseinrichtung längs des Schienenelements 10 hin und her motorisch verschiebbar und steuerbar ist und über die ebenfalls die Bild- und/oder Tonerfassungseinrichtungen, die darauf aufgenommen werden, verschwenkbar sind.

Mit der Fahreinrichtung verbunden und an dieser geeignet befestigt, ist der Richtungskoppler 18, der somit an allen Orten des Schienenelements 10, an dem die Fahreinrichtung positioniert ist, eine definierte Stellung und einen definierten Abstand zur Kopplungsschiene 12 einnimmt. Im Richtungskoppler 18 sind Signalkoppeldrähte 19, 20 vorgesehen, die im wesentlichen parallel zur Kopplungsschiene 12 bzw. parallel zum in der Kopplungsschiene ausgebildeten Hochfrequenzleiter 13 angeordnet sind. Die Signalkoppeldrähte 19, 20 sind geeignet mit den Video- und/oder Audiosignalausgängen der Bild- und/oder Tonerfassungseinrichtungen verbunden, so daß diese Signale über die Signalkoppeldrähte 19, 20 in den Hochfrequenzleiter 13 an jeder Stelle des Schienenelements 10 eingekoppelt werden können und somit eine Signaleinkopplung und somit Signalübertragung an allen Orten des Schienenelements 10 möglich ist, wo sich die Fahreinrichtung befindet.

Es sei noch darauf hingewiesen, daß das Schienenelement 10 aus einzelnen Schienenelemententeilen bestehen kann, die jeweils in ihrer Gesamtheit derart ausgebildet sind, wie es vorangehend beschrieben worden ist. D.h. mit anderen Worten, daß das Schienenelement 10 aus einzelnen Schienenelementteilen gleichen Aufbaus zusammensetzbar ist, wobei für eine Verbindung der einzelnen Hochfrequenzleiter der einzelnen Schienenelementteile und für eine geeignete Verbindung der Kontaktbahnen 17 der Stromversorgungsschienen 16 Rechnung getragen werden muß. Somit können die einzelnen Schienenelemente 10 als Teilelemente zu einer entsprechend den örtlichen Gegebenheiten zusammenstellbaren Gesamtschiene 10 zusammengefügt werden, wobei dafür auch unterschiedliche Formgestaltungen wie lineare Schienenelemente, gebogene oder sonstige geeignet ausgeformte Schienenelemente herangezogen werden können.

### Bezugszeichenliste

10 Schienenelement
11 Schlitz
12 Kopplungsschiene
13 Hochfrequenzleiter
14 Innenraum
15 Isolationsmittel
16 Stromversorgungsschiene
17 Kontaktbahn
18 Richtungskoppler
19 Signalkoppeldraht
20 Signalkoppeldraht

## Patentansprüche

1. Einrichtung zur Aufnahme und zum Transport von Bild- und/oder Tonerfassungseinrichtungen in Studios und/oder im Freien, wobei von den Bild- und/oder Tonerfassungseinrichtungen gelieferte hochfrequente Video- und/oder Audiosignale durch Übertragungseinrichtungen auf die Signale ver- und/oder bearbeitende Einrichtungen weitergeleitet werden, dadurch gekennzeichnet, das die Übertragungseinrichtung durch ein am Ort der jeweiligen Installation der Bild- und/oder Tonerfassungseinrichtung installierbares Schienenelement (10) gebildet wird, in das die von der Bild- und/oder Tonerfassungseinrichtung gelieferten hochfrequenten Signale berührungslos eingekoppelt werden, wobei die Bild- und/oder Tonerfassungseinrichtung vom Schienenelement (10) aufnehmbar und längs diesem verschiebbar ist.

2. Einrichtung nach Anspruch 1, dadurch gekennzeichnet, daß das Schienenelement (10) wenigstens durch eine in Längsrichtung geschlitzte (11), ansonsten im Querschnitt geschlossene Kopplungsschiene (12) gebildet wird.

3. Einrichtung nach Anspruch 2, dadurch gekennzeichnet, daß in der Kopplungsschiene (12) im wesentlichen im Querschnitt mittig ein in Längsrichtung der Kopplungsschiene (12) verlaufender Hochfrequenzleiter (13) angeordnet ist.

4. Einrichtung nach Anspruch 3, dadurch gekennzeichnet, daß der den Hochfrequenzleiter (13) umgebende Innenraum (14) der Kopplungsschiene (12) mit einem Isolationsmittel (15) angefüllt ist.

5. Einrichtung nach einem oder mehreren der Ansprüche 1 bis 4, dadurch gekennzeichnet, daß das Schienenelement (10) wenigstens eine Stromversorgungsschiene (16) mit in Längsrichtung verlaufenden Kontaktbahnen (17) umfaßt.

6. Einrichtung nach einem oder mehreren der Ansprüche 1 bis 5, dadurch gekennzeichnet, daß zur Aufnahme und zum Transport der Bild- und/oder Tonerfassungseinrichtung eine mit dem Schienenelement (10) verbindbare und an diesem längsverfahrbare Fahreinrichtung vorgesehen ist.

7. Einrichtung nach einem oder mehreren der Ansprüche 1 bis 6, dadurch gekennzeichnet, daß die Einkopplung der hochfrequenten Signale in das Schienenelement (10) bild- und/oder tonerfassungseinrichtungsseitig über einen mit der Bild- und/oder Tonerfassungseinrichtung verbundenen Richtungskoppler (18) erfolgt.

8. Einrichtung nach Anspruch 7, dadurch gekennzeichnet, daß der Richtungskoppler (18) wenigstens zwei im wesentlichen parallel angeordnete Signalkoppeldrähte (19, 20) umfaßt, über die die hochfrequenten Signale in das Schienenelement (10) eingekoppelt werden, wobei die Signalkoppeldrähte (19, 20) im wesentlichen parallel zum Schienenelement (10) ausgerichtet sind.

9. Einrichtung nach einem oder mehreren der Ansprüche 1 bis 8, dadurch gekennzeichnet, daß das Schienenelement (10) aus einem Metallprofil gebildet wird.

10. Einrichtung nach Anspruch 9, dadurch gekennzeichnet, daß das Metall aus Aluminium oder einer Aluminiumlegierung besteht.

11. Einrichtung nach einem oder mehreren der Ansprüche 3 bis 10, dadurch gekennzeichnet, daß der Hochfrequenzleiter (13) aus einem Rohr aus Kupfer oder einer Kupferlegierung besteht.
